# EUROPEAN PATENT SPECIFICATION

(11) **EP 3 677 369 B1**
(45) Date of publication and mention of the grant of the patent: **24.09.2025**
(21) Application number: 18850183.7
(22) Date of filing: 26.07.2018
(51) Int. Cl.: B23K 3/08

(54) **BRAZING CRUCIBLE**
LÖTTIEGEL
CREUSET DE BRASAGE

(30) Priority: 28.08.2017 CN 201721086330 U
(43) Date of publication of application: 08.07.2020
(73) Proprietor: Bosch Automotive Products (Suzhou) Co., Ltd., Jiangsu 215021 (CN)
(72) Inventor: LI, Guozhen, Suzhou Jiangsu 215021 (CN); LI, Zhiyong, Suzhou Jiangsu 215021 (CN)
(74) Representative: Isarpatent
(86) International application number: PCT/CN2018/097146
(87) International publication number: WO 2019/042050

(56) References cited:
- EP-B1- 2 131 636
- EP-B1- 2 131 636
- CN-A- 1 307 945
- CN-A- 102 804 939
- CN-U- 207 139 057
- JP-A- H02 112 875
- JP-A- S6 483 374

## Description

### Technical Field

The present invention relates to a brazing crucible according to the preamble of claim 1, which is known from EP 2 131 636 B 1.

### Background Art

A brazing crucible is mainly used for selective soldering of a semiconductor element, such as a component within a through hole of a printed circuit board. The specific heat capacity or thermal conductivity of a substrate used by the brazing crucible is an important factor that affects soldering quality. In addition, the wetting stability of the surface of the crucible which is in contact with a liquid solder also greatly affects the soldering quality and the service life of the brazing crucible. In the prior art, the brazing crucible is usually a single piece made of a material.

### Summary of the Invention

It is an object of the present invention to reduce the brazing defect rate, improve the service life of a brazing crucible and improve the brazing quality.

To this end, provided is a brazing crucible as defined in independent claim 1.

As claimed in the present invention, the structure of the brazing crucible is composed of two parts: the base body part and the soldering part that are made of different materials. As needed, the base body part and the soldering part may be parts which are respectively made of a material of a relatively large specific heat capacity and a material of a relatively good surface wettability, such that on the one hand, sufficient heat transfer can be achieved during use, and on the other hand, the stability of wettability of a soldering functional portion with a liquid brazing alloy can be improved. The base body part and the soldering part are arranged in a press-fitted inlaid structure, allowing compensation for heat loss and increased structural stability while achieving liquid solder sealing. In addition, the structure is simple in design, low in manufacturing cost, and the contamination risk of a solder bath containing the liquid solder is controllable.

### Brief Description of the Drawings

The above and other features and advantages of the present invention will be better understood from the following description of preferred embodiments in conjunction with the accompanying drawings, in which:
Fig. 1 shows an assembled perspective view of a brazing crucible as claimed in the present invention; and
Fig. 2 is a cross-sectional view of the brazing crucible of Fig. 1.

### Detailed Description of Embodiments

The present invention provides a brazing crucible of a composite inlaid structure, which is mainly used for, but not limited to, selective soldering of a component within a through hole of a printed circuit board.

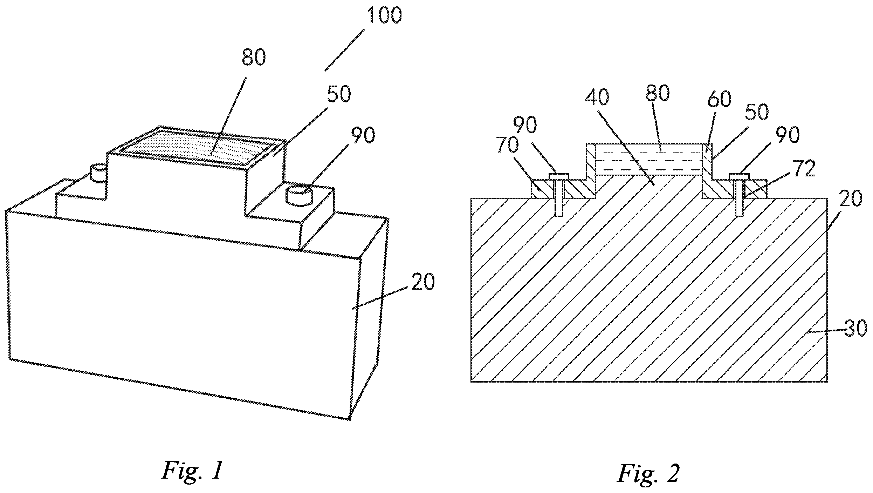

Referring to Fig. 1, a brazing crucible 100 as claimed in the present invention is mainly inlaid and assembled by a base body part 20 and a soldering part 50. The soldering part 50 is also called a soldering functional part.

The base body part 20 is mainly used to provide a heating source, which, as an example, may be made of a material such as pure copper or low carbon steel. When the brazing crucible 100 is used to solder an element within a through hole of a printed circuit board, the base body part 20 is brought into direct contact with a solder, so that the heat transfer effect can be sufficiently ensured. Preferably, the base body part 20 may be subjected to a passivation treatment or the like, as needed.

The soldering part 50 is mainly used to provide a stable wetting surface to ensure soldering quality. For example, the soldering part 50 may be made of Invar alloy. In order to gain an enhanced effect, the soldering part 50 may be subjected to the treatment of improving the surface wetting stability, such as chromization of an iron matrix or copper infiltration of an iron matrix. As claimed in the principle of the present invention, the base body part 20 and the soldering part 50 may not be limited to the materials listed above.

The base body part 20 and the soldering portion 50 are joined together in a convex inlaid structure, and the two are inlaid and assembled in a press fit manner, and define an inner space 80 for accommodating a liquid solder. Additionally or alternatively, the base body part 20 can also be joined to the soldering part 50 by means of a mechanical connection or magnetic attraction, etc.

Specifically, referring to Fig. 2, the base body part 20 comprises a base portion 30 and a protrusion 40 extending from the base portion 30 toward the soldering part 50. The soldering part 50 comprises a peripheral portion 60 defining the inner space 80 together with the protrusion 40 of the base body part 30, and a flange 70 extending from one end of the peripheral portion 60 that is close to the base portion 30 of the base body part 20 away from the inner space 80. In other words, the protrusion 40 comprises a bottom surface that defines the inner space 80, and the peripheral portion 60 comprises an inner peripheral surface that defines the inner space 80. The protrusion 40 of the base body part 20 is inlaid and assembled with the peripheral portion 60 of the soldering part 50 in a press fit manner, which provides a sealing effect to ensure that leakage of the liquid solder does not occur.

The mechanical connection between the flange 70 of the soldering part 50 and the base portion 30 of the base body part 20 includes, but is not limited to, a screw connection, a pin connection, a snap connection, an interference fit structure, etc., and the flange and the base portion can be joined together by means of magnetic attraction. As an example, the flange 70 comprises a through hole 72 through which a fastener 90 is arranged to pass. The fastener 90, such as the illustrated screw, is brought into a fastening hole formed on the base portion 30 of the base body part 20 through the through hole 72 of the flange 70 to fasten the flange and the base portion together. Optionally, where the fastener 90 is a screw, the through hole 72 may also be a threaded hole.

It should be understood by those skilled in the art that, additionally or alternatively, the sealing between the base body part 20 and the soldering part 50 can also be made between the flange 70 of the soldering part 50 and the base portion 30 of the base body part 20. In that case, the sealing can be achieved by any technical means known in the art that is capable of achieving the sealing between two surfaces.

The base portion 30 of the base body part 20 and the peripheral portion 60 of the soldering part 50 may have any suitable outer shape and size, depending on actual needs.

With the structure of the brazing crucible described above and illustrated in the drawings, the base body part 20 of the brazing crucible 100 is made of a material having a relatively large specific heat capacity and can achieve sufficient heat transfer during use. The soldering part 50 is made of a material having a relatively good surface wettability, such as Invar alloy, which can improve the stability level at which the soldering functional portion is wettable with a liquid brazing alloy. The base body part 20 and the soldering part 50 are assembled in a press-fit and inlaid structure, allowing compensation for heat loss and increased structural stability while achieving liquid solder sealing. The structure is simple in design, low in manufacturing cost, and the contamination risk of a solder bath containing the liquid solder is controllable.

As an alternative embodiment of the embodiment shown in the drawings and described above, the base body part 20 of the brazing crucible may comprise a flat top surface instead of the protrusion 40, whereby the inner space 80 is defined by the peripheral portion 60 of the soldering part 50 and the flat top surface of the base body part 20.

In another example which is not part of the invention, on the contrary to the projection 40, the base body part 20 of the brazing crucible may comprise a recess and a peripheral portion that defines the recess, the peripheral portion 60 of the soldering part 50 can be aligned with and hermetically mounted to the peripheral portion of the base body part 20, such that the inner space 80 is defined by the peripheral portion 60 of the soldering part 50, the peripheral portion of the base body part 20, and a bottom surface of the recess of the base body part 20. Optionally, the peripheral portion 60 of the soldering part 50 may extend into the recess and be hermetically inlaid and mounted to the recess of the base body part 20.

Examples show that in contrast with the integrated brazing crucible in the prior art, when the brazing crucible of the present invention is used to perform soldering within a through hole of a printed circuit board, the local brazing defect rate can be reduced by about 50%, so that the service life of the brazing crucible itself may be doubled, thus being capable of performing soldering cycles up to 10,000 times. The effort in manually cleaning the brazing crucible can be greatly reduced, for example, the frequency of manual cleaning can be reduced by half, and thus the safety of the cleaning staff can be ensured.

The present invention has been shown and described based on the preferred embodiments, but the present invention is not limited to the details shown in the drawings and described above. On the contrary, various modifications or variations are possible without departing from the scope of the appended claims.

## Claims

1. A brazing crucible, wherein the brazing crucible comprises a base body part (20) made of a first material and a soldering part (50) made of a second material different from the first material; an inner space (80) for accommodating a liquid solder is defined by the base body part (20) together with the soldering part (50); the soldering part (50) comprises a peripheral portion (60) defining the inner space (80); and the base body part (30) and the peripheral portion (60) of the soldering part (50) are hermetically fitted to each other to form the inner space (80);
**characterized in that**
the base body part (20) comprises a base portion (30) and a protrusion (40) extending from the base portion (30);
the protrusion (40) of the base body part (20) is press fitted into the peripheral portion (60) of the soldering part (50) in an inlaid manner;
the soldering part (50) further comprises a flange (70) extending from the peripheral portion (60) away from the inner space (80), and the flange (70) is joined to the base portion (30); and
the protrusion (40) comprises a bottom surface and the peripheral portion (60) comprises an inner peripheral surface that define the inner space (80).

2. The brazing crucible as claimed in claim 1, **characterized in that** the flange (70) is joined to the base portion (30) by means of a mechanical connection or magnetic attraction.

3. The brazing crucible as claimed in claim 1, **characterized in that** the flange (70) is joined to the base portion (30) by means of a screw connection, a pin connection or a snap connection.

4. The brazing crucible as claimed in claim 1, **characterized in that** the flange (70) comprises a through hole (72), and a fastener (90) is brought into a fastening hole formed on the base portion (30) through the through hole (72).

5. The brazing crucible as claimed in any one of claims 1-4, **characterized in that** the base body part (20) is a part made of pure copper or low carbon steel.

6. The brazing crucible as claimed in claim 5, **characterized in that** the base body part (20) is a part that is subjected to a passivation treatment.

7. The brazing crucible as claimed in any one of claims 1-6, **characterized in that** the soldering part (50) is a single piece made of Invar alloy.

8. The brazing crucible as claimed in claim 7, **characterized in that** the soldering part (50) is a single piece that has been treated with chromization of an iron matrix or copper infiltration of an iron matrix.

## Patentansprüche

1. Löttiegel, wobei der Löttiegel ein Basiskörperteil (20), das aus einem ersten Material hergestellt ist, und ein Lötteil (50) umfasst, das aus einem zweiten Material hergestellt ist, das sich von dem ersten Material unterscheidet; wobei ein Innenraum (80) zum Aufnehmen eines flüssigen Lots durch das Basiskörperteil (20) zusammen mit dem Lötteil (50) definiert wird; das Lötteil (50) einen Umfangsabschnitt (60) umfasst, der den Innenraum (80) definiert; und das Basiskörperteil (30) und der Umfangsabschnitt (60) des Lötteils (50) hermetisch aneinander gepasst sind, um den Innenraum (80) zu bilden;
**dadurch gekennzeichnet, dass**
das Basiskörperteil (20) einen Basisabschnitt (30) und einen Vorsprung (40) umfasst, der sich von dem Basisabschnitt (30) erstreckt;
der Vorsprung (40) des Basiskörperteils (20) in den Umfangsabschnitt (60) des Lötteils (50) eingelassen pressgepasst ist;
das Lötteil (50) ferner einen Flansch (70) umfasst, der sich von dem Umfangsabschnitt (60) weg von dem Innenraum (80) erstreckt, und der Flansch (70) mit dem Basisabschnitt (30) verbunden ist; und
der Vorsprung (40) eine untere Oberfläche umfasst und der periphere Abschnitt (60) eine innere periphere Oberfläche umfasst, die den Innenraum (80) definiert.

2. Löttiegel nach Anspruch 1, **dadurch gekennzeichnet, dass** der Flansch (70) mit dem Basisabschnitt (30) durch eine mechanische Verbindung oder magnetische Anziehung verbunden ist.

3. Löttiegel nach Anspruch 1, **dadurch gekennzeichnet, dass** der Flansch (70) mittels einer Schraubverbindung, einer Stiftverbindung oder einer Schnappverbindung mit dem Basisteil (30) verbunden ist.

4. Löttiegel nach Anspruch 1, **dadurch gekennzeichnet, dass** der Flansch (70) ein Durchgangsloch (72) umfasst und ein Befestigungselement (90) durch das Durchgangsloch (72) hindurch in ein am Basisabschnitt (30) ausgebildetes Befestigungsloch eingebracht ist.

5. Löttiegel nach einem der Ansprüche 1 bis 4, **dadurch gekennzeichnet, dass** das Basiskörperteil (20) ein Teil aus reinem Kupfer oder kohlenstoffarmem Stahl ist.

6. Löttiegel nach Anspruch 5, **dadurch gekennzeichnet, dass** das Basiskörperteil (20) ein Teil ist, das einer Passivierungsbehandlung unterzogen wird.

7. Löttiegel nach einem der Ansprüche 1 bis 6, **dadurch gekennzeichnet, dass** das Lötteil (50) ein einstückiges Teil aus Invar-Legierung ist.

8. Löttiegel nach Anspruch 7, **dadurch gekennzeichnet, dass** das Lötteil (50) ein einstückiges Teil ist, das mit Chromierung einer Eisenmatrix oder Kupferinfiltration einer Eisenmatrix behandelt worden ist.

## Revendications

1. Creuset de brasage, le creuset de brasage comprenant une partie corps de base (20) constituée d'un premier matériau et une partie brasage (50) constituée d'un deuxième matériau différent du premier matériau ; un espace intérieur (80) destiné à accueillir une brasure liquide est défini par la partie corps de base (20) conjointement avec la partie brasage (50) ; la partie brasage (50) comprend une portion périphérique (60) définissant l'espace intérieur (80) ; et la partie corps de base (30) et la portion périphérique (60) de la partie brasage (50) sont ajustées hermétiquement entre elles pour former l'espace intérieur (80) ;
**caractérisé en ce que**
la partie corps de base (20) comprend une portion de base (30) et une saillie (40) s'étendant depuis la portion de base (30) ;
la saillie (40) de la partie corps de base (20) est emmanchée à force à l'intérieur de la portion périphérique (60) de la partie brasage (50) à la manière d'une incrustation ;
la partie brasage (50) comprend en outre un rebord (70) s'étendant depuis la portion périphérique (60) en s'éloignant de l'espace intérieur (80), et le rebord (70) est assemblé à la portion de base (30) ; et
la saillie (40) comprend une surface inférieure et la portion périphérique (60) comprend une surface périphérique intérieure, qui définissent l'espace intérieur (80).

2. Creuset de brasage selon la revendication 1, **caractérisé en ce que** le rebord (70) est assemblé à la portion de base (30) au moyen d'un raccord mécanique ou d'une attraction magnétique.

3. Creuset de brasage selon la revendication 1, **caractérisé en ce que** le rebord (70) est assemblé à la portion de base (30) au moyen d'un raccord vissé, d'un raccord à broche ou d'un raccord encliquetable.

4. Creuset de brasage selon la revendication 1, **caractérisé en ce que** le rebord (70) comprend un trou débouchant (72), et un élément de fixation (90) est placé à l'intérieur d'un trou de fixation formé sur la portion de base (30) à travers le trou débouchant (72).

5. Creuset de brasage selon l'une quelconque des revendications 1 à 4, **caractérisé en ce que** la partie corps de base (20) est une partie constituée de cuivre pur ou d'acier doux.

6. Creuset de brasage selon la revendication 5, **caractérisé en ce que** la partie corps de base (20) est une partie qui est soumise à un traitement de passivation.

7. Creuset de brasage selon l'une quelconque des revendications 1 à 6, **caractérisé en ce que** la partie brasage (50) est une seule pièce constituée d'alliage Invar.

8. Creuset de brasage selon la revendication 7, **caractérisé en ce que** la partie brasage (50) est une seule pièce qui a été traitée par chromisation d'une matrice de fer ou infiltration au cuivre d'une matrice de fer.
